# EUROPÄISCHE PATENTSCHRIFT

(11) **EP 0 663 426 B1**
(45) Veröffentlichungstag und Bekanntmachung des Hinweises auf die Patenterteilung: **10.06.1998**
(21) Anmeldenummer: 95100182.5
(22) Anmeldetag: 09.01.1995
(51) Int. Cl.: C08L 81/06

(54) **Blends auf der Basis von Copolyarylenethersulfonen**
Blends based on copolyarylene ether sulfone
Mélanges à base de copolyarylène éther sulfones

(30) Priorität: 13.01.1994 DE 4400747
(43) Veröffentlichungstag der Anmeldung: 19.07.1995
(73) Patentinhaber: BASF Aktiengesellschaft, 67063 Ludwigshafen (DE)
(72) Erfinder: Weber, Martin, Dr., D-67433 Neustadt (DE); Leiter, Gerhard, D-69469 Weinheim (DE); Streib, Jürgen, Dr., D-67547 Worms (DE); Koch, Eckhard Michael, Dr., D-67136 Fussgönheim (DE)

(56) Entgegenhaltungen:
- EP-A- 0 294 773

## Beschreibung

Die vorliegende Erfindung betrifft Blends aus
A) 55 bis 99 Gew.-% einer Matrix aus Copolyarylenethersulfonen aufgebaut aus
   a₁) 91 bis 97 mol-% Struktureinheiten 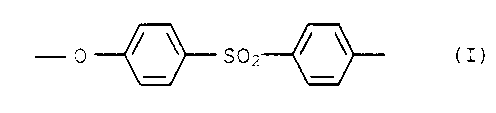 und
   a₂) 3 bis 9 mol-% Struktureinheiten 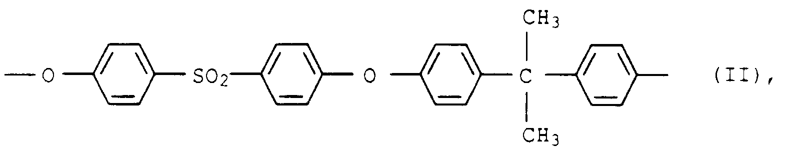
B) 1 bis 45 Gew.-% einer dispersen Phase aus Copolyarylenethersulfonen, aufgebaut aus
   b₁) 91 bis 97 mol-% Struktureinheiten II und
   b₂) 3 bis 9 mol-% Struktureinheiten I,
C) 0 bis 40 Gew.-% schlagzähmodifizierender Kautschuke,
D) 0 bis 35 Gew.-% faser- oder teilchenförmige Füllstoffe oder deren Mischungen und
E) 0 bis 40 Gew.-% Verarbeitungshilfsmittel und/oder Zusatzstoffe.

Ferner betrifft die vorliegende Erfindung ein Verfahren zur Herstellung dieser Blends und deren Verwendung.

Mischungen aus unterschiedlichen Polyarylenethersulfonen sind bekannt. So werden in der EP-B1-215 580 mischbare, d.h. einphasige Blends aus zwei oder mehr Polyarylenethersulfonen beschrieben, die als wiederkehrende Einheiten 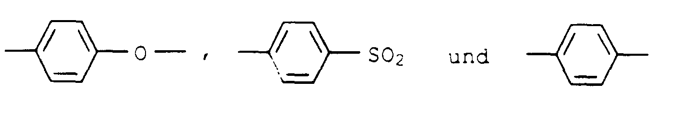 enthalten und die sich hinsichtlich der Zusammensetzung der Einheiten voneinander unterscheiden. Diese Blends eignen sich insbesondere für die Herstellung von Leiterplatten.

Aus der DE-A1-29 17 903 waren Zusammensetzungen zur Herstellung semipermeabler Membranen bekannt, die durch Mischen von zwei pulverförmigen Polyarylenethersulfonen erhalten werden, wovon das eine im wesentlichen aus Struktureinheiten I und das andere im wesentlichen aus Struktureinheiten II besteht.

Kochgeschirr aus einer Mischung aus Polyarylenethersulfonen mit wiederkehrenden Einheiten 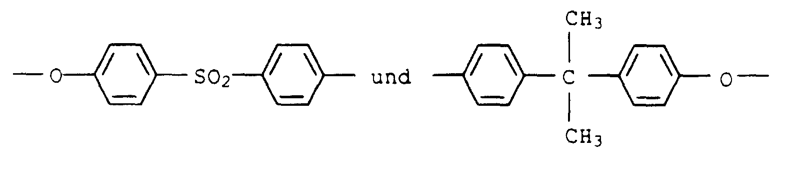 und solchen, die Struktureinheiten I und II enthalten, waren aus der EP-B1-127 852 bekannt.

Die DE-A1-37 19 631 lehrt transparente Formmassen, die Blends aus 1 bis 20 Gew.-% der Copolyarylenethersulfone A und 80 bis 99 Gew.-% der Copolyarylenethersulfone B umfassen.

Die bekannten Blends auf der Basis von Polyarylenethersulfonen genügen den hohen Anforderungen, die insbesondere an Materialien gestellt werden, die im Lebensmittelsektor Verwendung finden, nicht. Problematisch bleibt immer noch die hohe Feuchtigkeitsaufnahme der Polyarylenethersulfone. Bei erhöhten Temperaturen diffundiert das aufgenommene Wasser aus den Formteilen, was dazu führt, daß sich an deren Oberflächen Blasen bilden. Schwierigkeiten bereitet auch die hohe Schmelzviskosität der bekannten Materialien. Dies erschwert insbesondere die Herstellung großer Formkörper wie Schüsseln und Menueschalen. Darüber hinaus sind die Beständigkeiten der bekannten Blends gegenüber Chemikalien (z.B. aus Lebensmitteln oder Detergentien) noch nicht befriedigend.

Aufgabe der vorliegenden Erfindung war es daher neue Formmassen auf der Basis von Polyarylenethersulfonen zur Verfügung zu stellen, die sich sowohl gut verarbeiten lassen als sich auch durch geringe Wasseraufnahme und gute Chemikalienbeständigkeit auszeichnen. Diese Aufgabe wird von den eingangs definierten Blends gelöst.

Die erfindungsgemäßen Blends bestehen im wesentlichen aus zwei Phasen, einer Matrix aus den Copolyarylenethersulfonen A (Matrixpolymere) und einer dispersen Phase aus den Copolyarylenethersulfonen B (dispergierte Polymere). Die Matrixpolymeren A betragen 55 bis 99 Gew.-% der Blends. Bevorzugte Blends enthalten 58 bis 97 Gew.-%, insbesondere 60 bis 95 Gew.-% Matrixpolymere A. Entsprechend sind die in den Matrixpolymeren dispergierten Polymere B zu 1 bis 45 Gew.-%, bevorzugt zu 3 bis 42 Gew.-% in den erfindungsgemäßen Blends enthalten. Der Anteil der dispergierten Polymeren B in den erfindungsgemäßen Blends beträgt insbesondere 5 bis 40 Gew.-%.

Die Copolyarylenethersulfone A und B lassen sich beispielsweise dadurch herstellen, daß Mischungen, aus 2,2-Di-(4-hydroxyphenyl)propan (Bisphenol A) und 4,4'-Dihydroxydiphenylsulfon (Bisphenol S) mit 4,4'-Dichlordiphenylsulfon kondensiert werden. Entsprechende Reaktionsbedingungen sind dem Fachmann geläufig und z.B. der US-A 4 175 175, der EP-A1-113 112 sowie der EP-A1-135 130 zu entnehmen.

### Komponente C

Die erfindungsgemäßen Blends können neben den Komponenten A und B 0 bis 40, vorzugsweise 1 bis 20 Gew.-% schlagzähmodifizierender Kautschuke enthalten. Dabei eignen sich insbesondere solche, die Polyarylenether schlagzäh modifizieren können.

Als Kautschuke, die die Zähigkeit der Blends erhöhen, seien z.B. folgende genannt:

EP- bzw. EPDM-Kautschuke, die mit funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat.

Diese Monomeren können in der Schmelze oder in Lösung, gegebenenfalls in Gegenwart eines Radikalstarters wie Cumolhydroperoxid auf das Polymere aufgepfropft werden.

Weiterhin seien Copolymere von α-Olefinen genannt. Bei den α-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozeß bei einem Druck von 400 bis 4500 bar oder durch Pfropfen der Comonomeren auf das Poly-α-Olefin hergestellt werden. Der Anteil des α-Olefins an dem Copolymeren liegt i.a. im Bereich von 99,95 bis 55 Gew.-%.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein Polymerisat mit einer Glastemperatur von höchstens 0°C. Diese Produkte weisen eine Struktur aus einem Kern und mindestens einer Schale auf, wobei sich die Struktur durch die Reihenfolge der Monomerzugabe ergibt. Die weichen Bestandteile leiten sich i.a. von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischen oligomeren Octamethyltetrasiloxan oder Tetravinyltetramethyltetrasiloxan hergestellt werden. Diese können beispielsweise mit γ-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeigneter funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tertiär-Butyl(meth-)acrylat, Acrylsäure, Glycidyl(meth-)acrylat und Vinyloxazolin. Der Anteil an Monomeren mit funktionellen Gruppen beträgt i.a. 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt i.a. 1:9 bis 9:1, bevorzugt 3:7 bis 8:2.

Derartige Kautschuke sind an sich bekannt und beispielsweise in der EP-A 208 187 beschrieben.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkette Segmente, die sich von niedermolekularen Diolen und Dicarbonsäuren ableiten, enthalten. Derartige Produkte sind an sich bekannt und in der Literatur, z.B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

### Komponente D

Neben den genannten Komponenten können die erfindungsgemäßen Blends 0 bis 35 Gew.-%, faser- oder teilchenförmige Füllstoffe oder deren Mischungen enthalten.

Bevorzugte faserförmige Füll- oder Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte und einem Haftvermittler ausgerüstet sein. Im allgemeinen haben die verwendeten Kohlenstoff- und Glasfasern einen Durchmesser im Bereich von 6 bis 20 µm.

Die Einarbeitung der Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,06 bis 0,5 mm.

Kohlenstoff- oder Glasfasern können auch in Form von Geweben, Matten oder Rovings eingesetzt werden.

Als teilchenförmige Füllstoffe eignen sich amorphe Kieselsäure, Magnesiumcarbonat (Kreide), gepulverter Quarz, Glimmer, Talkum, Feldspat, Glaskugeln und insbesondere Calciumsilikate wie Wollastonit und Kaolin (insbesondere kalzinierter Kaolin).

Bevorzugte Kombinationen von Füllstoffen sind z.B. 20 Gew.-% Glasfasern mit 15 Gew.-% Wollastonit und 15 Gew.-% Glasfasern mit 15 Gew.-% Wollastonit. Daneben sind auch Blends mit 1 bis 6 Gew.-% Ruß, 5 bis 25 Gew.-% Wollastonit sowie 0 bis 15 Gew.-% Kohlenstoff-Fasern von Interesse.

### Komponente E

Neben den beschriebenen Bestandteilen A bis D können die erfindungsgemäßen Blends noch 0 bis 40 Gew.-% Verarbeitungshilfsmittel und/oder Zusatzstoffe wie Flammschutzmittel, Pigmente oder Stabilisatoren enthalten.

Die erfindungsgemäßen Blends können dadurch hergestellt werden, daß man die Komponenten in der Schmelze mischt und extrudiert.

Die erfindungsgemäßen Blends können z.B. hergestellt werden, indem man die Ausgangskomponenten in üblichen Mischvorrichtungen wie Schneckenextrudern vorzugsweise Zweischneckenextrudern, Brabender-Mühlen oder Banburry-Mühlen sowie Knetern mischt und anschließend extrudiert. Nach der Extrusion wird das Extrudat abgekühlt und zerkleinert.

Die Reihenfolge der Mischung der Komponenten kann variiert werden, so können zwei oder ggf. drei Komponenten vorgemischt werden, es können aber auch alle Komponenten gemeinsam gemischt werden.

Um möglichst homogene Blends zu erhalten, ist eine intensive Durchmischung vorteilhaft. Dazu sind im allgemeinen mittlere Mischzeiten von 0,2 bis 20 Minuten bei Temperaturen von 280 bis 400°C erforderlich.

Die erfindungsgemäßen Blends lassen sich thermoplastisch verarbeiten. Sie zeichnen sich durch gute Fließfähigkeiten und geringe Wasseraufnahme aus. Sie eignen sich zum Herstellen von Folien, Fasern, Beschichtungen und Formkörpern. Besonders gut eignen sich die erfindungsgemäßen Blends zur Herstellung von Haushaltsgeräten wie Kochgeschirr oder Geräten für den medizinischen Sektor.

### Beispiele

Das getrocknete Granulat wurde bei 330 bis 360°C zu Normkleinstäben, Rundscheiben und Testkästchen verarbeitet. Die Wärmeformbeständigkeit der Proben wurde mittels der Vicat-Erweichungstemperatur beurteilt. Die Vicat-Erweichungstemperatur wurde nach DIN 53 460, mit einer Kraft von 49,05 N und einer Temperatursteigerung von 50 K je Stunde, an Normkleinstäben ermittelt.

Die Fließfähigkeit der Blends wurde nach DIN 53 735 bei einer Temperatur von 320°C und einer Belastung von 21,6 kg bestimmt. Die Wasseraufnahme der Blends wurde an Testkästchen mit einer Wandstärke von 1,5 mm nach 14-tägiger Wasserlagerung bei 25°C bestimmt. Die Temperatur, bei der Blasenbildung durch austretende Feuchtigkeit auftrat (T_{B}) wurde durch folgenden Test ermittelt:

Die Testkästchen wurden nach 14-tägiger Wasserlagerung 30 Minuten in einem vorgewärmten Umluftofen gelagert und anschließend visuell begutachtet. Ermittelt wurde die Temperatur, bei der erstmals Blasen auftreten.

Die Chemikalienbeständigkeit wurde mittels der Biegestreifenmethode nach DIN 53 449, Teil 3 beurteilt. Die Lagerdauer betrug jeweils 24 Stunden, die Temperatur der Prüfmedien (3 gew.-%ige Essigsäure) betrug 96°C.

Die Schädigungsarbeit Wₛ wurde an Rundscheiben nach DIN 53 443 getestet. Die Zähigkeit aₖ wurde nach Carpy (DIN 53 353) ermittelt.

Die Zusammensetzung der Blends und die Ergebnisse der anwendungstechnischen Prüfungen sind den Tabellen 1 und 2 zu entnehmen.

### Komponente A₁

Copolyarylenether enthaltend 95 mol-% Struktureinheiten I und 5 mol-% Struktureinheiten II (VZ=59 ml/g; gemessen in 1 Gew.-%iger Lösung eines Gemisches von Phenol und 1,2-Dichlorbenzol im Verhältnis 1 : 1 bei 23°C, z.B. Handelprodukt Ultrason E 2010, BASF).

### Komponente α₁

Polyarylenether enthaltend 100 mol-% Struktureinheiten I (VZ=56 ml/g; gemessen in 1 Gew.-iger Lösung eines Gemisches von Phenol und 1,2-Dichlorbenzol im Verhältnis 1 : 1 bei 23°C) .

### Komponente α₂

Copolyarylenether enthaltend 63,5 mol-% Struktureinheiten I und 36,5 mol-% Struktureinheiten II (VZ=57 ml/g; gemessen in 1 Gew.-%iger Lösung eines Gemisches von Phenol und 1,2-Dichlorbenzol im Verhältnis 1 : 1 bei 23°C).

### Komponente B₁

Copolyarylenether enthaltend 95 mol-% Struktureinheiten II und 5 mol-% Struktureinheiten I (VZ=64 ml/g; gemessen in 1 Gew.-%iger Lösung eines Gemisches von Phenol und 1,2-Dichlorbenzol im Verhältnis 1 : 1 bei 23°C, z.B. Handelsprodukt Ultrason S 2010).

### Komponente β₁

Polyarylenether enthaltend 100 mol-% Struktureinheiten II (VZ=65 ml/g; gemessen in 1 Gew.-%iger Lösung eines Gemisches von Phenol und 1,2-Dichlorbenzol im Verhältnis 1 : 1 bei 23°C).

### Beispiele 1 und 2 sowie Vergleichsbeispiele V₁ bis V₆

Die Komponenten wurden in einem Zweiwellenextruder bei einer Massetemperatur vom 320 bis 380°C gemischt. Die Schmelze wurde durch ein Wasserbad geleitet und granuliert.

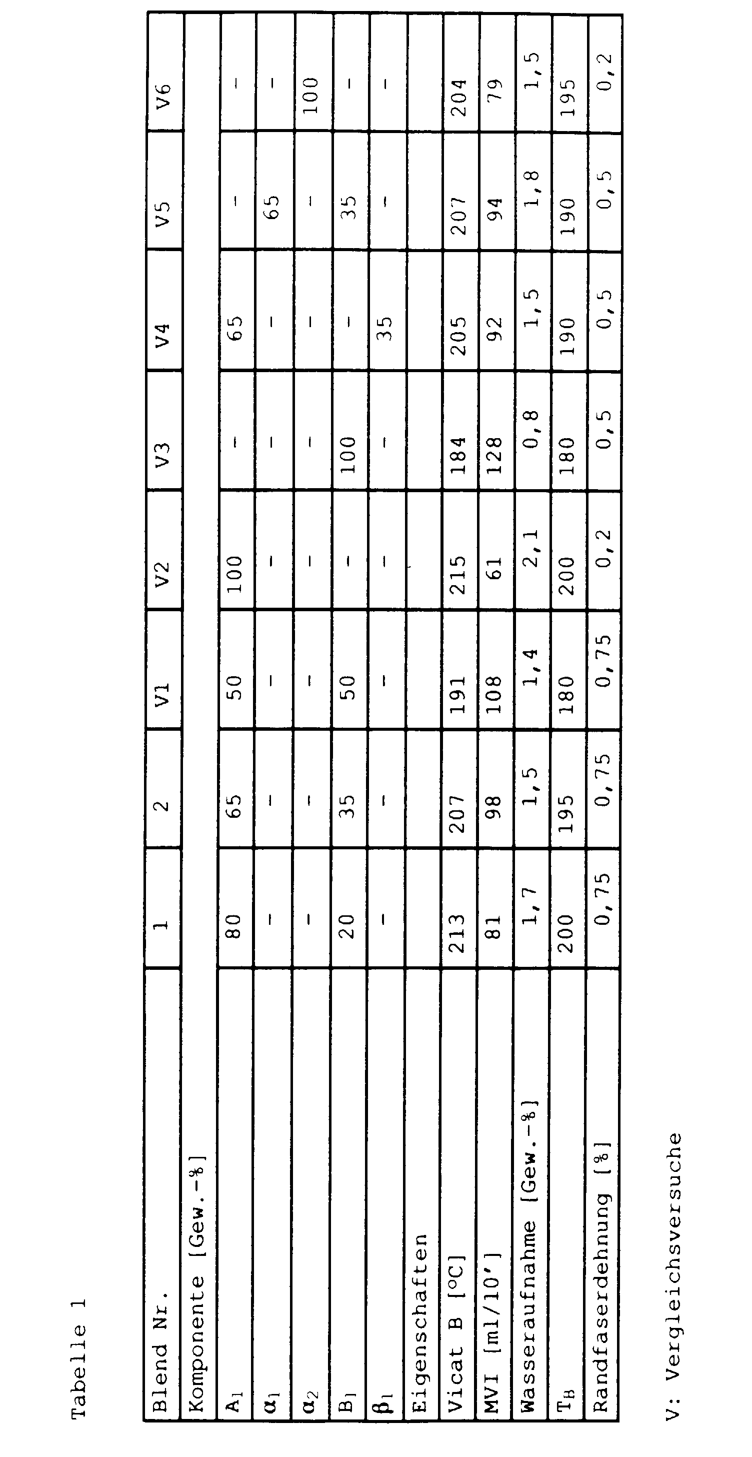

Die erfindungsgemäßen Blends weisen gegenüber den Einzelkomponenten verbesserte Fließfähigkeiten und überraschenderweise verbesserte Chemikalienbeständigkeiten auf (V2 und V3). Blends aus den Copolyarylenethersulfonen A₁ und B₁, die nicht die erfindungsgemäße Zusammensetzung aufweisen, sind den erfindungsgemäßen Blends hinsichtlich der Temperatur, bei der Blasenbildung erfolgt, unterlegen (siehe V1).

Gegenüber Blends aus Polyarylenethern, die jeweils aus 100 mol-% Struktureinheiten I (V₄) bzw. II (V5) bestehen, weisen die erfindungsgemäßen Blends verbesserte Wärmeformbeständigkeiten und Chemikalienbeständigkeiten auf. Dies gilt auch für Copolyarylenethersulfone, die aus den Struktureinheiten I und II aufgebaut sind und worin I und II in einem Molverhältnis zueinanderstehen, das dem der Blends vergleichbar ist (V₆).

### Beispiel 3

65 Gew.-% der Komponente A₁ und 35 Gew.-% der Komponente B₁ wurden wie oben beschrieben in der Schmelze gemischt und granuliert. Anschließend wurde das Granulat bei einer Kunststofftemperatur von 350°C und einer Werkzeugoberflächentemperatur von 120°C zu Normkleinstäben und Rundscheiben verarbeitet.

### Vergleichsbeispiel V₇

65 Gew.-% Pulver der Komponente A₁ und 35 Gew.-% Pulver der Komponente B₁ wurden in einem Flügelradmischer gemischt und anschließend bei einer Kunststofftemperatur von 350°C und einer Werkzeugtemperatur von 120°C zu Normkleinstäben und Rundscheiben verarbeitet.

**Tabelle 2**

| Blend Nr. | 3 | V7 |
|---|---|---|
| Komponente [Gew.-%] | | |
| A₁ | 65 | 65 |
| B₁ | 35 | 35 |

| Eigenschaften | | |
|---|---|---|
| Vicat B [°C] | 207 | 199 |
| Wₛ [Nm] | 98 | 77 |
| aₖ [kJ/m²] | 7 | 4,6 |

Wie die Versuche zeigen weisen Formkörper aus Blends, die nach dem erfindungsgemäßen Verfahren hergestellt wurden, bessere mechanische Eigenschaften auf als solche aus Pulvermischungen.

## Patentansprüche

1. Blends aus
A) 55 bis 99 Gew.-% einer Matrix aus Copolyarylenethersulfonen aufgebaut aus
a₁) 91 bis 97 mol-% Struktureinheiten 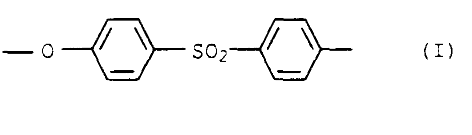 und
a₂) 3 bis 9 mol-% Struktureinheiten 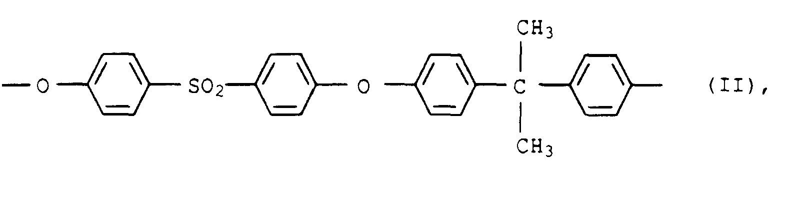
B) 1 bis 45 Gew.-% einer dispersen Phase aus Copolyarylenethersulfonen, aufgebaut aus
b₁) 91 bis 97 mol-% Struktureinheiten II und
b₂) 3 bis 9 mol-% Struktureinheiten I,
C) 0 bis 40 Gew.-% schlagzähmodifizierender Kautschuke,
D) 0 bis 35 Gew.-% faser- oder teilchenförmige Füllstoffe oder deren Mischungen und
E) 0 bis 40 Gew.-% Verarbeitungshilfsmittel und/oder Zusatzstoffe.

2. Blends nach Anspruch 1 aus
| | | |
|---|---|---|
| A) | 60 bis 95 Gew.-% | Copolyarylenethersulfonen A |
| B) | 5 bis 40 Gew.-% | Copolyarylenethersulfonen B |
| C) | 0 bis 40 Gew.-% | schlagzähmodifizierender Kautschuke, |
| D) | 0 bis 35 Gew.-% | faser- oder teilchenförmige Füllstoffe oder deren Mischungen und |
| E) | 0 bis 40 Gew.-% | Verarbeitungshilfsmittel und/oder Zusatzstoffe. |

3. Blends nach Anspruch 1 aus
| | | |
|---|---|---|
| A) | 55 bis 98 Gew.-% | Copolyarylenethersulfonen A |
| B) | 1 bis 44 Gew.-% | Copolyarylenethersulfonen B |
| C) | 1 bis 20 Gew.-% | schlagzähmodifizierender Kautschuke und |
| E) | 0 bis 40 Gew.-% | Verarbeitungshilfsmittel und/oder Zusatzstoffe. |

4. Verfahren zur Herstellung von Blends aus
A) 55 bis 99 Gew.-% einer Matrix aus Copolyarylenethersulfonen aufgebaut aus
a₁) 91 bis 97 mol-% Struktureinheiten 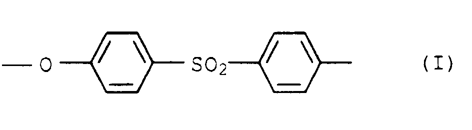 und
a₂) 3 bis 9 mol-% Struktureinheiten 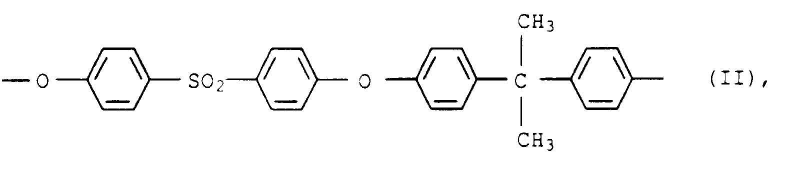
B) 1 bis 45 Gew.-% einer dispersen Phase aus Copolyarylenethersulfonen, aufgebaut aus
b₁) 91 bis 97 mol-% Struktureinheiten II und
b₂) 3 bis 9 mol-% Struktureinheiten I,
C) 0 bis 40 Gew.-% schlagzähmodifizierender Kautschuke,
D) 0 bis 35 Gew.-% faser- oder teilchenförmige Füllstoffe oder deren Mischungen und
E) 0 bis 40 Gew.-% Verarbeitungshilfsmittel und/oder Zusatzstoffe, dadurch gekennzeichnet, daß man die Komponenten in der Schmelze mischt.

5. Verwendung der Blends gemäß einem der Ansprüche 1 bis 3 zur Herstellung von Fasern, Folien, Beschichtungen oder Formkörpern.

6. Fasern, Folien, Beschichtungen oder Formkörper, enthaltend Blends gemäß einem der Ansprüche 1 bis 3.

7. Formkörper nach Anspruch 6, dadurch gekennzeichnet, daß sie Kochgeschirr sind.

## Claims

1. A blend comprising
A) from 55 to 99% by weight of a matrix of copolyarylene ether sulfones composed of
a₁) from 91 to 97 mol% of structural units 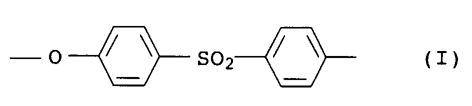 and
a₂) from 3 to 9 mol% of structural units 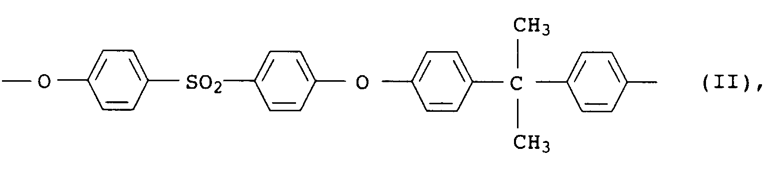
B) from 1 to 45% by weight of a disperse phase comprising copolyarylene ether sulfones, composed of
b₁) from 91 to 97 mol% of structural units II and
b₂) from 3 to 9 mol% of structural units I,
C) from 0 to 40% by weight of rubber impact modifiers,
D) from 0 to 35% by weight of fibrous or particulate fillers or of a mixture thereof and
E) from 0 to 40% by weight of processing assistants and/or additives.

2. A blend as claimed in claim 1, comprising
| | | |
|---|---|---|
| A) | from 60 to 95% by weight of | copolyarylene ether sulfones A, |
| B) | from 5 to 40% by weight of | copolyarylene ether sulfones B, |
| C) | from 0 to 40% by weight of | rubber impact modifiers, |
| D) | from 0 to 35% by weight of | fibrous or particulate fillers or of mixtures thereof and |
| E) | from 0 to 40% by weight of | processing assistants and/or additives. |

3. A blend as claimed in claim 1, comprising
| | | |
|---|---|---|
| A) | from 55 to 98% by weight of | copolyarylene ether sulfones A, |
| B) | from 1 to 44% by weight of | copolyarylene ether sulfones B, |
| C) | from 1 to 20% by weight of | rubber impact modifiers and |
| E) | from 0 to 40% by weight of | processing assistants and/or additives. |

4. A process for the preparation of a blend comprising
A) from 55 to 99% by weight of a matrix of copolyarylene ether sulfones composed of
a₁) from 91 to 97 mol% of structural units 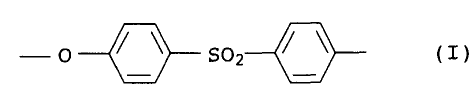 and
a₂) from 3 to 9 mol% of structural units 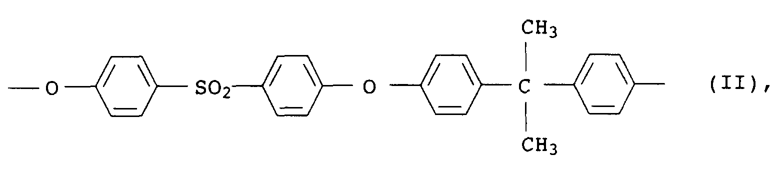
B) from 1 to 45% by weight of a disperse phase comprising copolyarylene ether sulfones, composed of
b₁) from 91 to 97 mol% of structural units II and
b₂) from 3 to 9 mol% of structural units I,
C) from 0 to 40% by weight of rubber impact modifiers,
D) from 0 to 35% by weight of fibrous or particulate fillers or of a mixture thereof and
E) from 0 to 40% by weight of processing assistants and/or additives,
wherein the components are mixed in the melt.

5. The use of a blend as claimed in any of claims 1 to 3 for the production of fibers, films, coatings or moldings.

6. A fiber, film, coating or molding containing a blend as claimed in any of claims 1 to 3.

7. A molding as claimed in claim 6, which is a cooking utensil.

## Revendications

1. Mélanges de
A) 55 à 99% en poids d'une matrice de copolyarylèneéthersulfones constituées de
a₁) 91 à 97% molaires d'unités de structure : 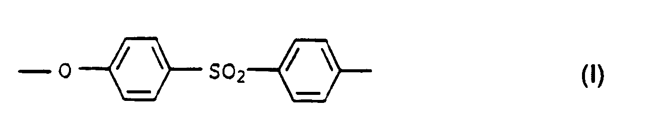 et
a₂) 3 à 9% molaires d'unités de structure : 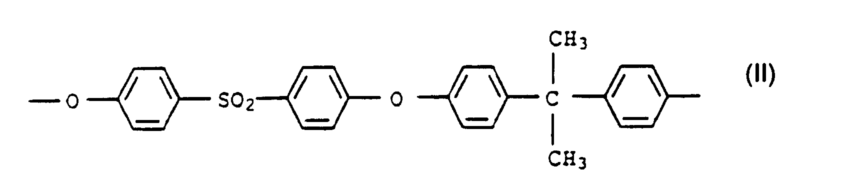
B) 1 à 45% en poids d'une phase dispersée de copolyarylène-éthersulfones constituées de
b₁) 91 à 97% molaires d'unités de structure II, et
b₂) 3 à 9% molaires d'unités de structure I,
C) 0 à 40% en poids de caoutchoucs modificateurs de résilience,
D) 0 à 35% en poids de charges fibreuses ou particulaires ou de leurs mélanges, et
E) 0 à 40% en poids d'adjuvants d'ouvrabilité et/ou d'additifs.

2. Mélanges suivant la revendication 1, formés de
A) 60 à 95% en poids de copolyarylèneéthersulfones A,
B) 5 à 40% en poids de copolyarylèneéthersulfones B,
C) 0 à 40% en poids de caoutchoucs modificateurs de résilience,
D) 0 à 35% en poids de charges fibreuses ou particulaires ou de leurs mélanges, et
E) 0 à 40% en poids d'adjuvants d'ouvrabilité et/ou d'additifs.

3. Mélanges suivant la revendication 1, formés de
A) 55 à 98% en poids de copolyarylèneéthersulfones A,
B) 1 à 44% en poids de copolyarylèneéthersulfones B,
C) 1 à 20% en poids de caoutchoucs modificateurs de résilience, et
E) 0 à 40% en poids d'adjuvants d'ouvrabilité-et/ou d'additifs.

4. Procédé de préparation de mélanges de
A) 55 à 99% en poids d'une matrice de copolyarylèneéthersulfones constituées de
a₁) 91 à 97% molaires d'unités de structure : 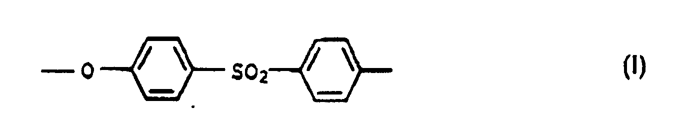 et
a₂) 3 à 9% molaires d'unités de structure : 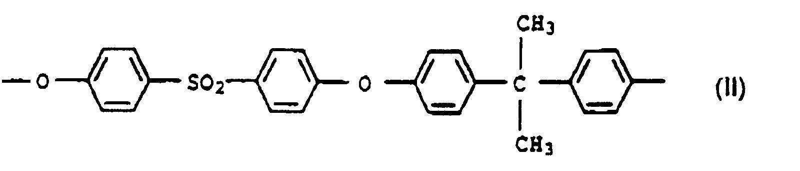
B) 1 à 45% en poids d'une phase dispersée de copolyarylène-éthersulfones constituées de
b₁) 91 à 97% molaires d'unités de structure II, et
b₂) 3 à 9% molaires d'unités de structure I,
C) 0 à 40% en poids de caoutchoucs modificateurs de résilience,
D) 0 à 35% en poids de charges fibreuses ou particulaires ou de leurs mélanges, et
E) 0 à 40% en poids d'adjuvants d'ouvrabilité et/ou d'additifs, caractérisé en ce que l'on mélange les composants à l'état fondu.

5. Utilisation des mélanges suivant l'une quelconque des revendications 1 à 3, pour la fabrication de fibres, de feuilles, de revêtement ou d'articles moulés.

6. Fibres, feuilles, revêtements ou articles moulés, qui contiennent des mélanges suivant l'une quelconque des revendications 1 à 3.

7. Articles moulés suivant la revendication 6, caractérisés en ce qu'ils sont constitués d'ustensiles ou de batteries de cuisine.
